# EUROPÄISCHE PATENTANMELDUNG

(11) **EP 0 568 020 A2**
(43) Veröffentlichungstag der Anmeldung: **03.11.1993**
(21) Anmeldenummer: 93106827.4
(22) Anmeldetag: 27.04.1993
(51) Int. Cl.: G06F 3/033

(54) **Anordnung zur dezentralen Datenaufnahme in Krankenhäusern**

(30) Priorität: 29.04.1992 DE 4214143
(71) Anmelder: SKT Schmelter GmbH & Co. KG, gesetzlich vertreten durch Herrn Reinhard Blumentahl, D-79138 Waldkirch (DE)
(72) Erfinder: Dr.Martin Kemper, 4400 Münster (DE)

(57) **Zusammenfassung**

Bei einer Anordnung zur dezentralen Datenaufnahme in Krankenhäusern, Hotels und ähnlichen Einrichtungen, mit einem Flachbildschirm als Kommunikationsendgerät, wobei der Flachbildschirm mit einem Anschluß an ein bidirektionales Datennet ausgestattet ist und dem Flachbildschirm ein Positionsdetektor zugeordnet ist zur Erkennung des Vorhandenseins und der Position eines Eingabestifts am oder vor dem Flachbildschirm, schlägt die Erfindung vor, daß ein Fernsehschirm auch für die Dateneingabe benutzt wird, der vom Fernsehbetrieb auf den Betreib der hausinternen Kommunikation umschaltbar ist und wobei der Flachbildschirm im Bereich des hausinternen Kommunikationsteilnehmers (beispielsweise des Patienten oder des Hotelgastes) angeordnet ist. Dadurch wird ermöglicht, daß einerseits eine Dateneingabe bei jedem Kommunikationsteilnehmer innerhalb des Krankenhauses, Hotels oder einer ähnlichen Einrichtung auch für den Patienten, Hotelgast od. dgl. möglich ist, ohne die Anzahl der dem Teilnehmer ohnehin zur Verfügung stehenden Geräte zu erhöhen.

## Beschreibung

Die Erfindung betrifft eine Anordnung nach dem Oberbegriff des Anspruches 1.

Derartige Anordnungen sind beispielsweise aus der DE-39 14 499 A1 bekannt. Bei ihnen ist eine Eingabe von Daten durch den Arzt bzw. durch das Personal vorgesehen, wobei die Anordnung beispielsweise im Arztzimmer bzw. im Behandlungsraum angeordnet sein soll Der Bildschirm selbst kann dabei zur Dateneingabe benutzt werden, indem beispielsweise die Position eines Lichtgriffels vor dem Bildschirm erkannt wird und auf diese Weise am Bildschirm angezeigte Funktionsfelder ausgewählt werden können.

Weiterhin sind beispielsweise aus amerikanischen Piltotprojekten sogenannte "touch panels" bekannt, die als Eingabestelle zur Eingabe beispielsweise organisatorischer Daten dienen. Diese "touch panels" reagieren berührungssensitiv, so daß nach Fingerdruck auf ein bestimmtes Symbolfeld die gewünschten Daten am Bildschirm angezeigt werden oder die Eingabe von Daten möglich ist.

Bei den bekannten "touch panels" ist nachteilig, daß sie entweder auf einem Krankenhausflur oder in einem Krankenzimmer für mehrere Patienten angeordnet sind. Beispielsweise bei Abruf der Medikation für einen bestimmten Patienten kann der Datenschutz kaum gewahrt bleiben. Zudem kann dies nicht vom Krankenbett aus erfolgen und das Bedienungspersonal muß ständig hin- und herlaufen. Würden derartige "touch panels" an jedem Patientbett aufgestellt, so ergäbe sich eine Überfrachtung am Patientenbett mit technischen Einrichtungen, die einerseits unerwünscht viel Platz einnimmt und andererseits vom Patienten häufig aus psychologischen Gründen nicht gewünscht wird.

Weiterhin ist aus der DE-37 22 973 bekannt, ein Fernsehgerät zur Eingabe von Daten zu benutzen, in dem die Empfangseinheit für die Infrarotfernbedienung auch zum Empfang von Patientendaten dient, die über eine entsprechende Sendeeinrichtung Infrarotstrahlen abstrahlt. Auch bei dieser Anordnung soll als Bestätigung für die korrekte Eingabe von Daten eine Anzeige der Daten auf dem Bildschirm erfolgen.

Bei dieser Anordnung ist ebenfalls nachteilig, daß die zum Teil patientenindividuellen Angaben für Dritte einsehbar auf einem Gemeinschaftsbildschirm innerhalb eines Krankenzimmers angeordnet werden, daß die Fernsehgeräte üblicherweise als zentraler Bildschirm für alle Patienten eines Krankenzimmers einsehbar angeordnet sind.

Der Erfindung liegt die Aufgabe zugrunde, eine gattungsgemäße Anordnung dahingehend zu verbessern, daß einerseits eine Dateneingabe bei jedem Kommunikationsteilnehmer innerhalb des Krankenhauses, Hotels oder einer ähnlichen Einrichtung auch für den Patienten, Hotelgast od. dgl. möglich ist, ohne die Anzahl der dem Teilnehmer ohnehin zur Verfügung stehenden Geräte zu erhöhen.

Diese der Erfindung zugrundeliegende Aufgabe wird durch eine Anordnung gemäß Anspruch 1 gelöst.

Die Erfindung ermöglicht es, an jedem Patientenbett einen eigenen Fernsehschirm für den Patienten vorzusehen und diesen Fernsehschirm auch als Kommunikationsendgerät für die Dateneingabe zu benutzen. Da die Baugröße üblicher Fernsehschirme mit einer Kathodenstrahlröhre zu groß ist und einen zu großen Platzbedarf am Patientenbett erfordert, wird die Verwendung eines Flachbildschirmes vorgeschlagen, der die Zuordnung eines eigenen Bildschirmes an jedem Patientenbett möglich macht.

Sofern die angezeigten Daten patientenbezogen sind, beispielsweise die Medikation betreffen, stellt die erfindungsgemäße Anordnung einen verbesserten Datenschutz sicher, da nicht alle im Zimmer Anwesenden diese Daten lesen können, wie dies beispielsweise bei einem zentral im Zimmer für alle Patienten verfügbaren und einsehbaren Fernsehschirm der Fall ist. Verschiedene individuell wählbare Fernsehprogramme im Patientenzimmer sind auch bei mehreren Patienten möglich, was bei zentral angeordneten, für alle Patienten einsehbaren Fernsehgeräten bislang nicht möglich ist. Für den Patienten ergibt sich daher nicht der Eindruck einer unerwünschten Überfrachtung mit zu vielen und weiteren Geräten, sondern der Eindruck einer größeren Individualität. Eine gegenseitige Störung wird erheblich vermindert. Beim gemeinschaftlich vorhandenen Fernsehgerät konnte sie beispielsweise dadurch auftreten, daß ein Patient sich durch den hellen Bildschirm gestört fühlte, was durch die erfindungsgemäße Anordnung weitestgehend ausgeschlossen ist.

Der Fernsehschirm kann entweder auf ein Eingabemenü umgeschaltet werden oder auf Symbolfelder, wobei die Auslösung eines derartigen Symbolfeldes entweder berührungslos, beispielsweise durch einen Lichtstift, erfolgen kann oder durch Antippen beispielsweise mit einem Stift, einem Finger oder anderen geeigneten Gegenständen, so daß der Begriff "Stift" weit gefaßt ist und auch Gegenstände umfaßt, die nicht notwendig langgestreckt und stiftartig geformt sind.

Bei Verwendung eines lichtempfindlichen Stifts kann die Anordnung so ausgelegt sein, daß eine Schwester einen derartigen Stift mit sich führt und in die-Geräte bei den Patienten einsteckt. Dadurch kann automatisch vom Fernsehbetrieb auf den Betrieb der krankenhausinternen Kommunikation umgeschaltet werden, so daß beispielsweise ein Menü oder Symbolfelder auf dem Bildschirm erscheinen. Indem der Stift vor einen bestimmten Bildschirmpunkt gehalten wird, kann ein lichtempfindlicher Sensor an der Spitze des Stiftes die Position des Stiftes ermitteln.

So kann der Stift beispielsweise über eine Logik Informationen aus der Ansteuerung des Bildschirmes, z B. durch Auswertung der Zeilenfrequenzansteuerung der Bildpunkte, gewinnen und darüber die aktuelle Position des Stiftes bestimmen. Bei Druck auf eine Eingabe- oder Auslösetaste, die z. B. am Stift angebracht ist, kann demzufolge ein bestimmter Menüpunkt angewählt und zur Ausführung gebracht werden.

Alternativ dazu kann der Stift aber auch mit einem kapazitiven, resistiven oder induktiven Sensor ausgestattet sein, der über eine geeignete Detektionsmaske im LCD-Schirm die Position vorgeben kann.

Alternativ zu einem derartigen Stift ist auch eine dünne durchsichtige Folie mit Matrix-Eigenschaften denkbar, die über den LCD-Schirm gespannt wird und die sich durch druck- oder lichtempfindliche physikalische Eigenschaften auszeichnet, so daß eine Positionserkennung beispielsweise auf Fingerdruck ermöglicht wird oder mit Hilfe eines geeigneten einfachen Eingabegerätes, z. B. eines einfachen, ohne Sensoren ausgestatteten Stiftes. Indem sich beispielsweise die mechanischen oder optischen Eigenschaften, ggf. aber auch die elektrischen oder andere Eigenschaften dieser Folie ändern, ist eine Positionserkennung des Stiftes möglich.

Bei Benutzung des ohnehin im Krankenhaus installierten HF-Netzes als Antennennetz zur Versorgung der einzelnen Patientenzimmer mit teils fremden und teils hauseigenen Radio- und Fernsehangeboten oder bei Benutzung des vorhandenen Telefonnetzes, ist eine bidirektionale Datenverbindung möglich. So kann beispielsweise per Farbwechsel der angewählten Menümaske direkt eine Bestätigung für den Benutzer sichtbar gemacht werden.

Neben der Benutzung als Fernsehgerät für den Patienten einerseits und als Datenübertragungsgerät für die krankenhausinterne Kommunikation für das Personal andererseits, kann die erfindungsgemäße Anordnung auch dazu dienen, eine krankenhausinterne Kommunikation für den Patienten zur Verfügung zu stellen. So kann beispielsweise zentral für alle Patienten oder für jeden Patienten individuell sein Fernsehbildschirm auf eine von der Krankenhauszentrale gewählte Anzeige geschaltet werden. So können beispielsweise die einzelnen zur Verfügung stehenden Angebote des Mittagessens für den folgenden Tag angezeigt und von jedem Patienten individuell ausgewählt und zu einem Menü zusammengestellt werden. Je nach Pflegezustand kann eine derartige Eingabeaufforderung auch für bestimmte Patienten unterdrückt werden. Beispielsweise bei Patienten, die garade von der Operation kommen und aus der Narkose aufwachen, kann eine derartige Anzeige unterbleiben, da, um in dem gewählten Beispiel zu bleiben, die Krankenschwester das Essen für den nächsten Tag für diesen Patienten zusammenstellt. Die Übermittlung von Daten kann dabei nach Art eines Bildtelefons ggf. auch die Übertragung bewegter Bilder beinhalten.

Der Zentralrechner fragt nach der Freischaltung nacheinander die einzelnen Fernsehgeräte ab, bei denen die eingegebenen Daten zwischengespeichert sind. Nach dieser Abfrage können die einzelnen Fernsehschirme wieder auf Fernsehbetrieb umgeschaltet werden. Dies kann ebenfalls wieder vom Zentralrechner erfolgen, so daß der Patient in dieser erneuten Umschaltung eine Bestätigung erkennt, daß seine eingegebenen Daten abgerufen worden sind.

Eine besonders gute Bewegungsfreiheit wird dem Patienten dadurch ermöglicht, daß die Datenverbindung vom Fernsehgerät zu weiteren Komponenten der Krankenhauskommunikationseinrichtung drahtlos erfolgt, beispielsweise per Funk oder über Infrarotsignale. Auf diese Weise können auch Patienten mit eingeschränkter Beweglichkeit das Fernsehgerät so plazieren, daß eine gute Betrachtung des Fernsehschirmes möglich ist und gleichzeitig der Fernsehschirm für die Eingabe von Daten gut erreichbar ist.

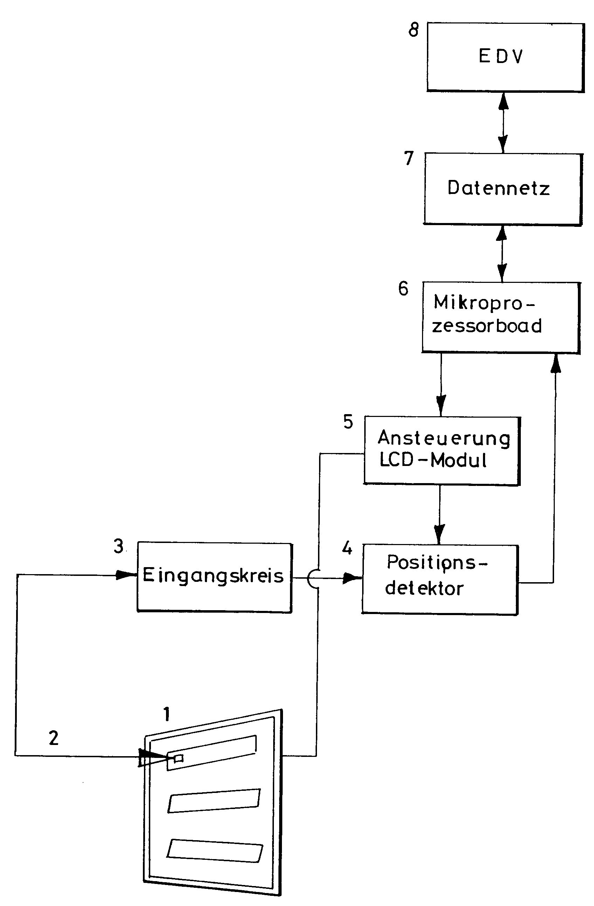

In der Zeichnung ist schematisch eine erfindungsgemäße Anordnung dargestellt. Dabei ist mit 1 ein Flachbildschirm, beispielsweise ein LCD-Bildschirm eines Fernsehgerätes angedeutet, welches am Patientenbett angeordnet ist. Auf dem Bildschirm 1 sind mehrere Auswahlmöglichkeiten angezeigt, beispielsweise mehrere Befehle in Form eines Befehlsmenüs oder mehrere Alternativen der auszuwählenden Mittagsmahlzeit für den kommenden Tag od. dgl.

Ein mit 2 schematisch angedeuteter Stift zeigt auf eine der auswählbaren Möglichkeiten. Der angedeutete Stift 2 kann beispielsweise ein Lichtstift sein, wobei diesem Stift ein Eingangskreis 3 zugeordnet ist, der das Signal des Stiftes auswertet. Diese Signalverarbeitung wird vom Eingangskreis 3 einem Positionsdetektor 4 zur Verfügung gestellt, der anhand der übermittelten Informationen die Position des Stiftes 2 am Bildschirm 1 erkennt.

Im Fernsehgerät ist ein LCD-Ansteuerungsmodul 5 vorgesehen, welches zur Ansteuerung der Bildpunkte des Bildschirms dient. Weiterhin befindet sich im Fernsehgerät oder zumindest dem Fernsehgerät zugeordnet ein Mikroprozessorboard, welches Informationen aus dem Positionsdetektor erhält und aufgrund seiner Verbindung mit dem Modul 5 erkennt, auf welchen der auszuwählenden Punkte der Stift 2 am Bildschirm 1 gerichtet ist. Auf diese Weise erkennt das Mikroprezessorboard 6, welcher Befehl eingegeben wird. Eine Bestätigung des eingegebenen Befehls kann beispielsweise darüber erfolgen, daß der Mikroprozessor seinerseits auf das Ansteuerungsmodul 5 zugreift und einen Farbwechsel am Bildschirm im Bereich des ausgewählten und eingegebenen Befehls erzeugt, so daß für den Patienten sichtbar eine Bestätigung seines eingegebenen Befehls erkennbar ist.

Vom Mikroprozessorboard besteht eine bidirektionale Datenverbindung über das Datennetz 7, welches mit einem Zentralrechner 8 verbunden ist.

So ist beispielsweise denkbar, daß der Farbumschlag zur Bestätigung an den Patienten erst dann erfolgt, nachdem die zentrale EDV-Anlage 8 den Befehl akzeptiert hat. Beispielsweise kann die Anzahl der verfügbaren Mittagessen nicht ausreichen oder der Patient ein Gericht ausgewählt haben, welches nicht zu seinem Diätplan paßt. In diesem Fall kann beispielsweise eine erneute Eingabeaufforderung erfolgen oder ein Hinweis angezeigt werden, daß der empfangene Befehl nicht akzeptiert wird.

## Patentansprüche

1. Anordnung zur dezentralen Datenaufnahme in Krankenhäusern, Hotels und ähnlichen Einrichtungen, mit einem Flachbildschirm als Kommunikationsendgerät, wobei der Flachbildschirm mit einem Anschluß an ein bidirektionales Datennetz ausgestattet ist und dem Flachbildschirm ein Positionsdetektor zugeordnet ist zur Erkennung des Vorhandenseins und der Position eines Eingabestifts am oder vor dem Flachbildschirm, dadurch gekennzeichnet, daß ein Fernsehschirm auch für die Dateneingabe benutzt wird, der vom Fernsehbetrieb auf den Betrieb der hausinternen Kommunikation umschaltbar ist und wobei der Flachbildschirm im Bereich des hausinternen Kommunikationsteilnehmers (beispielsweise des Patienten oder des Hotelgastes) angeordnet ist.

2. Anordnung nach Anspruch 1, gekennzeichnet durch einen lichtempfindlichen Stift zur Positionserkennung des gerade angesteuerten Bildpunktes.

3. Anordnung nach Anspruch 1, gekennzeichnet durch einen Stift, dessen Position am Bildschirm über kapazitive und/oder resistive und/oder induktive Einflüsse erkennbar ist.

4. Anordnung nach Anspruch 1, gekennzeichnet durch eine vor dem Bildschirm angeordnete Folie, deren beispielsweise mechanische oder optische Eigenschaften im Zusammenwirken mit einem Anzeigestift veränderlich sind und der Erkennung der Stiftposition dienen.

5. Anordnung nach einem der vorhergehenden Ansprüche, dadurch gekennzeichnet, daß ein HF-Netz (Antennennetz) zur bidirektionalen Datenübertragung verwendet wird.

6. Anordnung nach einem der Ansprüche 1 bis 4, dadurch gekennzeichnet, daß ein Telefonnetz zur bidirektionalen Datenübertragung verwendet wird.

7. Anordnung nach einem der vorhergehenden Ansprüche, gekennzeichnet durch eine drahtlose Übertragung der Daten vom Fernsehgerät zu weiteren Einheiten der Krankenhauskommunikation, beispielsweise über Funk oder über Infrarotsignale.
